# FASCICULE DE BREVET EUROPEEN

(11) **EP 1 169 168 B1**
(45) Date de publication et mention de la délivrance du brevet: **10.09.2003**
(21) Numéro de dépôt: 00918946.5
(22) Date de dépôt: 11.04.2000
(51) Int. Cl.: B29C 45/28, B29C 33/00, B29C 33/24, F16K 3/02

(54) **VANNE D'INJECTION, EN PARTICULIER POUR MOULE POUR LENTILLE OPTIQUE**
EINSPRITZVENTIL, INSBESONDERE FÜR FORM FÜR OPTISCHE LINSE
INJECTION VALVE, ESPECIALLY FOR A MOULD FOR AN OPTICAL LENS

(30) Priorité: 13.04.1999 FR 9904579
(43) Date de publication de la demande: 09.01.2002
(73) Titulaire: ESSILOR INTERNATIONAL (Compagnie Générale d'Optique), F-94220 Charenton-le-Pont (FR)
(72) Inventeur: HUARD, Marc, F-94140 Alfortville (FR); BESSIERE, Benoît, F-94260 Fresnes (FR); MASSAU, Joel, F-94000 Créteil (FR)
(74) Mandataire: Santarelli
(86) Numéro de dépôt international: FR0000929
(87) Numéro de publication internationale: WO00061349

(56) Documents cités:
- FR-A- 2 624 050
- US-A- 3 985 300
- US-A- 4 340 203
- US-A- 5 378 138

## Description

La présente invention concerne d'une manière générale les vannes d'injection du type de celles mises en oeuvre pour l'alimentation d'un quelconque moule en une quelconque matière de moulage.

Elle vise plus particulièrement celles de ces vannes d'injection qui comportent, globalement, un canal d'injection, qui ouvre à l'extérieur par un débouché, et qui, à distance de ce débouché, présente un orifice d'entrée propre à l'arrivée de la matière de moulage, et un tiroir, qui est monté mobile en translation dans ce canal d'injection, et sous le contrôle duquel se trouve le débouché de celui-ci.

Des vannes d'injection de ce type sont par exemple décrites dans les brevets américains Nos 5 221 509, 5 378 138, et 5 470 219.

La présente invention vise plus particulièrement le cas où, par elle-même, la matière de moulage est de nature à soulever des difficultés.

Cela est le cas, notamment, des matières synthétiques polymérisables usuellement mises en oeuvre pour le moulage de lentilles optiques, et, en particulier pour celui de lentilles ophtalmiques, c'est-à-dire de verres de lunettes.

Les difficultés soulevées par ces matières synthétiques potymérisables lors d'un tel moulage sont de deux ordres.

Tout d'abord, elles conduisent fréquemment au dépôt impromptu d'une pellicule de matière au sein même de la vanne d'injection par laquelle elles transitent, même si celle-ci a été traitée intérieurement avec un matériau présumé s'opposer à un tel dépôt, ce qui conduit à un gommage intempestif de cette vanne d'injection, voire à son blocage.

En outre, dès qu'elles sont soumises à une certaine discontinuité dans leur trajet, et cela ne manque évidement pas d'être le cas lors de leur traversée d'une vanne d'injection, ces matières synthétiques polymérisables sont fréquemment l'objet d'un phénomène de "bullage", c'est-à-dire d'une formation spontanée de bulles en leur sein, susceptible d'être une cause de rebut pour le produit moulé dans ces conditions, et, notamment, pour les lentilles optiques.

La présente invention a d'une manière générale pour objet une disposition qui, de manière assez inattendue, permet de minimiser avantageusement, sinon annuler, les risques de gommage et de "bullage".

Elle est fondée sur l'observation, non révélée à ce jour, que le maintien en circulation de la matière de moulage amenée à la vanne d'injection après qu'ait été dûment assuré le remplissage recherché du moule desservi est précisément de nature à minimiser ces risques de gommage et de "bullage".

La présente invention a ainsi plus précisément pour objet une vanne d'injection, pour l'alimentation d'un moule en matière de moulage, comportant un canal d'injection, qui ouvre à l'extérieur par un débouché, et qui, à distance de ce débouché, présente un orifice d'entrée propre à l'arrivée de la matière de moulage, et un tiroir, qui est monté mobile en translation dans le canal d'injection, et sous le contrôle duquel se trouve le débouché de celui-ci, caractérisée en ce que le canal d'injection présente un orifice de sortie propre à une évacuation de la matière de moulage, et en ce que le tiroir est agencé pour pouvoir, dans une certaine position, empêcher l'injection de matière au travers du débouché tout en autorisant la circulation de matière à l'intérieur du canal d'injection, entre les orifices d'entrée et de sortie.

Ainsi, dès lors que le moule a été rempli, la matière de moulage qui arrive à la vanne d'injection continue à circuler, en étant évacuée de cette vanne d'injection par l'orifice de sortie prévu à cet effet.

Toute stagnation de cette matière de moulage dans la vanne d'injection, comme cela est normalement le cas lorsque cette matière de moulage vient en butée en cul-de-sac au fond du canal d'injection après que le moule desservi ait été rempli, est avantageusement évitée.

Il en résulte que, comme recherché, les risques de gommage de la vanne d'injection sont eux-mêmes avantageusement minimisés.

Il s'avère, en outre, qu'il en est avantageusement de même pour les risques de "bullage" dans la matière de moulage lors du moulage de celle-ci.

On notera que l'on connaissait déjà, par le document FR 2 624 050 A, qui couvre les caractéristiques du préambule de la revendication 1, une buse d'injection dans un moule chaud permettant une circulation de la résine à injecter pendant les phases d'attente, afin de résoudre un problème technique différent, qui est celui d'éviter qu'en raison du contact avec le moule chaud, la résine durcisse et forme des particules plus dures entraînées ensuite au moment de l'injection et provoquant la formation de défauts de surface sur les pièces moulées. Dans cette buse d'injection, il est prévu une gaine tubulaire d'injection de la résine dans le moule chaud présentant deux orifices d'entrée diamétralement opposés propres à l'arrivée de la matière de moulage, et une aiguille cylindrique pleine montée mobile en translation dans la gaine d'injection. Un carter définit autour de la gaine une chambre à section oblongue dans laquelle débouchent deux conduites d'alimentation diamétralement opposées. Le carter est lui-même entouré par une enveloppe cylindrique, une circulation d'eau de refroidissement s'effectuant dans la chambre existant entre le carter et l'enveloppe. Les axes des conduites d'alimentation et de la gaine sont coplanaires. Dans la gaine sont ménagées deux ouvertures oblongues diamétralement opposées, orientées parallèlement au plan contenant les axes de la gaine et des conduites d'alimentation. Dans une position d'injection, les orifices d'entrée sont démasqués par l'aiguille, la résine arrivant par les conduites d'alimentation pénètre dans la gaine par les ouvertures d'entrée et s'écoule ensuite dans la gaine d'où elle est injectée dans le moule. Dans une position d'attente, les ouvertures d'entrée sont masquées par l'aiguille pleine tandis que la circulation de la résine dans l'une des conduites d'alimentation a été inversée à l'aide d'un système de vanne. La résine arrivant par la conduite dont la circulation n'a pas été inversée, ne peut pas entrer dans la gaine et circule en fait dans la chambre existant entre la gaine et le carter pour rejoindre la conduite dont le sens de circulation a été inversé. La circulation de la résine en circuit fermé existant dans la position d'attente permet d'utiliser l'inertie thermique de la résine pour empêcher son durcissement, et donc pour empêcher que les particules plus dures qui auraient ainsi été formées soient ensuite entraînées par la résine au moment de l'injection et provoquent la formation de défauts de surface sur les pièces moulées.

Les caractéristiques et avantages de l'invention ressortiront d'ailleurs de la description qui va suivre, à titre d'exemple, en référence aux dessins schématiques annexés sur lesquels :
la figure 1 est, à échelle réduite, une vue en élévation d'une vanne d'injection suivant l'invention, représentée en position sur un moule ;
la figure 2 est une vue de côté de l'ensemble, suivant la flèche II de la figure 1 ;
la figure 3 est, à échelle supérieure, une vue en coupe transversale du corps de vanne que comporte la vanne d'injection suivant l'invention, suivant la ligne III-III de la figure 1 ;
la figure 4 reprend, à échelle encore supérieure, le détail de la figure 3 repéré par un encart IV sur cette figure 3 ;
la figure 5 est une vue de dessus du corps de vanne, suivant la flèche V de la figure 3 ;
la figure 6 est une vue en coupe d'une des deux coquilles constitutives de ce corps de vanne, suivant la ligne VI-VI de la figure 5 ;
la figure 7 est une vue en élévation du tiroir de la vanne d'injection suivant l'invention ;
la figure 8 est une vue en coupe longitudinale de ce tiroir, suivant la ligne VIII-VIII de la figure 7 ;
la figure 9 en est une vue en coupe transversale, suivant la ligne IX-IX de la figure 7 ;
les figures 10A et 10B sont des vues partielles en coupe, qui, dérivées, à échelle supérieure, de celle de la figure 6, illustrent deux phases successives d'intervention de ce tiroir dans le corps de vanne ;
la figure 11 est une vue en coupe analogue à celle de la figure 3, pour une variante de réalisation ;
la figure 12 reprend, à échelle supérieure, le détail de la figure 11 repéré par un encart XII sur cette figure 11 ;
la figure 13 est, suivant la ligne XIII-XIII de la figure 11, une vue en coupe analogue à celle de la figure 6 pour cette variante de réalisation ;
la figure 14 est une vue en coupe longitudinale d'une autre variante de réalisation de la vanne d'injection suivant l'invention ;
la figure 15 est une vue en coupe transversale de cette autre variante de réalisation, suivant la ligne XV-XV de la figure 14 ;
la figure 16 est, à échelle supérieure, une vue en élévation du tiroir correspondant ;
la figure 17 est une vue partielle en coupe longitudinale de ce tiroir, suivant la ligne XVII-XVII de la figure 16 ;
la figure 18 est une vue partielle en coupe longitudinale analogue à celle de la figure 17, pour une variante de réalisation ;
la figure 19 est une vue partielle en élévation de cette variante de réalisation, suivant la flèche XIX de la figure 18.

Ces figures illustrent, à titre d'exemple, l'application de l'invention au moulage d'une lentille optique, et, plus précisément, d'une lentille ophtalmique, non représentée.

De manière connue en soi, le moule 10 mis en oeuvre pour un tel moulage est formé de deux coquilles de moulage 11A, 11B à la périphérie desquelles est établi annulairement un élément de fermeture 12 définissant avec elles la cavité de moulage 13 nécessaire.

Dans la forme de mise en oeuvre représentée, les coquilles de moulage 11A, 11B sont disposées de chant, et l'élément de fermeture 12 est formé de deux mors 12', 12", qui, portés par un bâti commun non représenté, sont aptes à enserrer conjointement, par leur tranche, les coquilles de moulage 11A, 11B, en présentant chacun à cet effet intérieurement un contour hémicirculaire, et dont l'un, au moins, par exemple le mors 12" supérieur, est mobile par rapport à l'autre, le mors 12' inférieur, pour permettre l'insertion entre eux de ces coquilles de moulage 11A, 11B.

Les dispositions correspondantes sont bien connues par elles-mêmes, notamment par le brevet français qui, déposé le 12 décembre 1994, sous le No 94 14926, a été publié sous le No 2 727 894, et, ne relevant pas par elles-mêmes de la présente invention, elles ne seront pas décrites plus en détail ici.

De manière également connue en soi, il est mis en oeuvre, pour l'alimentation du moule 10 en matière de moulage, et, plus précisément, pour l'alimentation de sa cavité de moulage 13, une vanne d'injection 15.

Par exemple, et tel que décrit dans le brevet français No 94 14926 mentionné ci-dessus, cette vanne d'injection 15 intervient à la partie basse de la cavité de moulage 13, et, plus précisément, au point le plus bas de celle-ci.

Pour ce faire, le mors 12' inférieur de l'élément de fermeture 12 comporte, localement, une ouverture de coulée 16, à laquelle est appliquée la vanne d'injection 15.

De manière connue en soi, enfin, la vanne d'injection 15 comporte, intérieurement, d'une part, un canal d'injection 17, qui ouvre à l'extérieur par un débouché 18 à l'une de ses extrémités, en concordance avec l'ouverture de coulée 16 du moule 10, et qui, à distance de ce débouché 18, et suivant des dispositions décrites plus en détail ultérieurement, présente un orifice d'entrée 19A propre à l'arrivée de la matière de moulage, et, d'autre part, un tiroir 20, qui est monté mobile en translation dans le canal d'injection 17, et sous le contrôle duquel se trouve le débouché 18 de celui-ci.

Suivant l'invention, le canal d'injection 17 présente un orifice de sortie 19B propre à une évacuation de la matière de moulage.

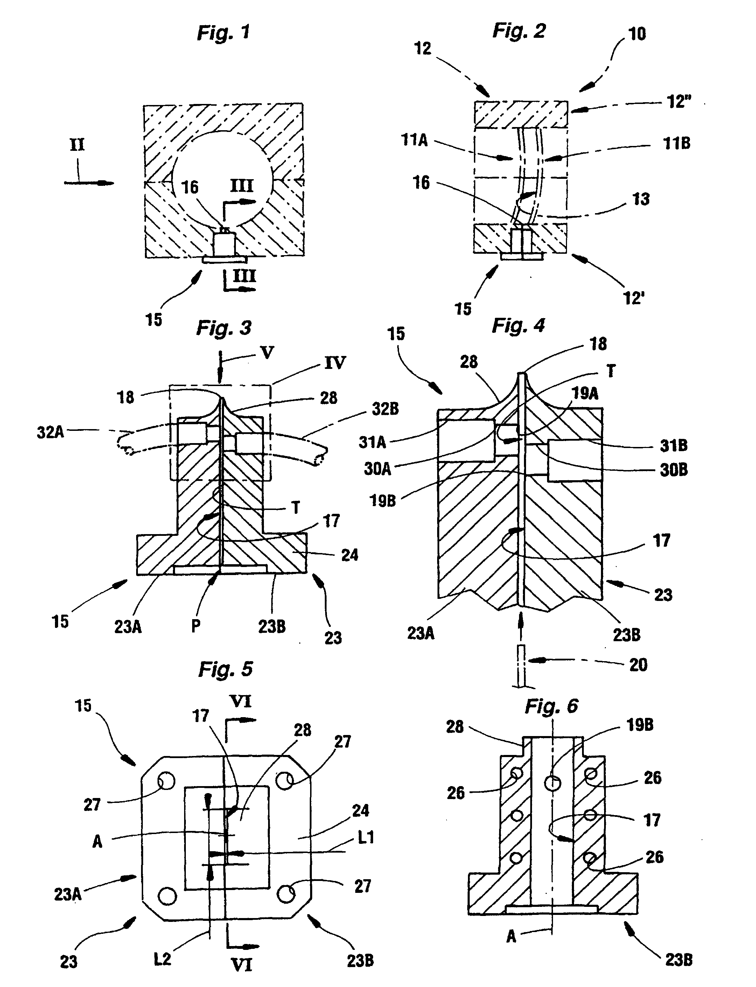

Dans les formes de réalisations plus particulièrement représentées sur les figures 3 à 13, comme son débouché 18, l'orifice d'entrée 19A et l'orifice de sortie 19B du canal d'injection 17 sont l'un et l'autre sous le contrôle du tiroir 20.

Par exemple, et tel que représenté, l'orifice d'entrée 19A et l'orifice de sortie 19B du canal d'injection 17 interviennent latéralement sur un tronçon T de ce canal d'injection 17 au contact de la paroi duquel le tiroir 20 est monté coulissant.

Dans les formes de réalisation plus particulièrement représentées sur les figures 3 à 13, la vanne d'injection 15 forme, par ailleurs, une pièce distincte du moule 10, et elle comporte, en pratique, un corps de vanne 23, dans lequel s'étend son canal d'injection 17, et par lequel elle est adaptée à être rapportée sur le moule 10, et, plus précisément, sur le mors 12' inférieur de l'élément de fermeture 12 que comporte ce moule 10, en présentant, pour ce faire, à sa base, une bride de fixation 24.

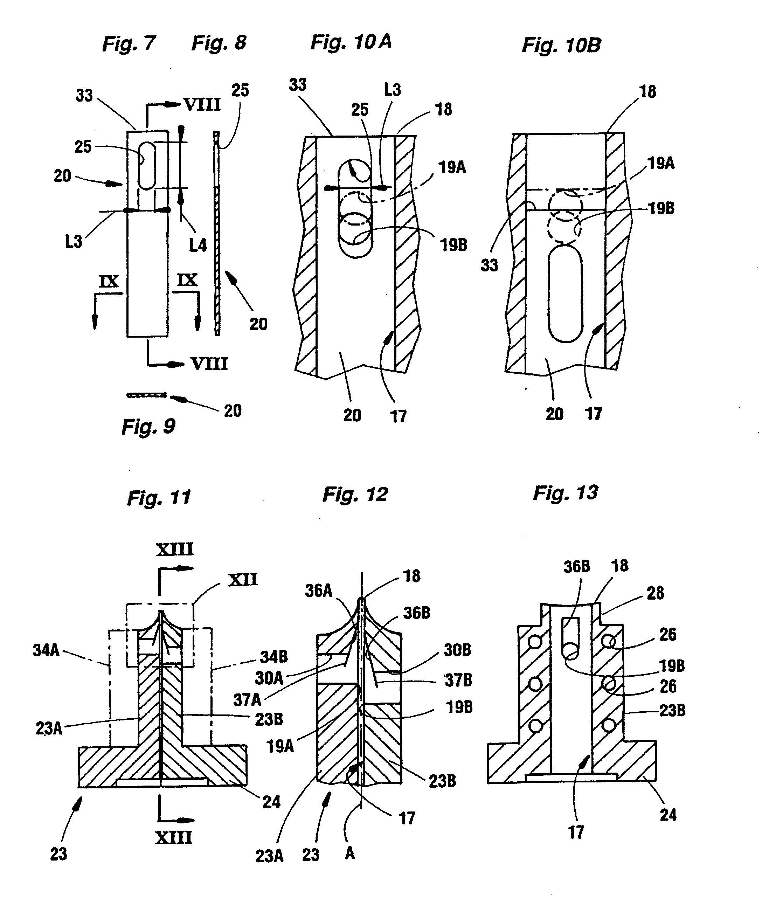

Conjointement, dans ces formes de réalisation, le canal d'injection 17 à une même section transversale sur toute sa longueur, en traversant de part en part le corps de vanne 23 de la bride de fixation 24 à son débouché 18, et, suivant des dispositions décrites plus en détail ultérieurement, le tiroir 20, qui est représenté isolément sur les figures 7 à 9, présente, transversalement, une lumière 25, qui le traverse de part en part, et par l'intermédiaire de laquelle l'orifice d'entrée 19A et l'orifice de sortie 19B du canal d'injection 17 peuvent être mis en communication l'un avec l'autre.

En pratique, dans les formes de réalisation représentées sur les figures 3 à 13, la section transversale du canal d'injection 17 est rectangulaire, avec une largeur L1 très inférieure à sa longueur L2, figure 5, et le tiroir 20 se présente globalement sous la forme d'une lame mince, dont la section transversale, rectangulaire, est complémentaire de celle du canal d'injection 17, et dont le contour, en élévation, est lui aussi rectangulaire.

Il résulte de ce qui précède que, dans les formes de réalisation représentées sur les figures 3 à 13, le tronçon T du canal d'injection 17 sur lequel interviennent l'orifice d'entrée 19A et l'orifice de sortie 19B ne se trouve pas concrètement matérialisé, compte tenu de l'uniformité de la section transversale de ce canal d'injection 17 sur toute sa longueur.

Dans les formes de réalisation représentées sur les figures 3 à 13, le corps de vanne 23 est formé de deux coquilles 23A, 23B affrontées l'une à l'autre par un plan de joint P qui interfère longitudinalement avec le canal d'injection 17.

Préférentiellement, et cela est le cas dans ces formes de réalisation, le plan de joint P s'étend suivant l'une des grandes faces du canal d'injection 17, en sorte que celui-ci appartient totalement à l'une des coquilles 23A, 23B, en l'espèce la coquille 23B, ainsi qu'il ressort des figures 5 et 6.

Seule, donc, cette coquille 23B est à usiner pour la formation du canal d'injection 17.

En revanche, la face correspondante de la coquille 23A est avantageusement lisse.

Bien entendu, les deux coquilles 23A, 23B constitutives du corps de vanne 23 sont dûment solidarisées l'une à l'autre, par exemple, par des vis, non représentées, qui interviennent transversalement de part et d'autre du canal d'injection 17.

Pour ce faire, et ainsi qu'il est visible pour la coquille 23B sur la figure 6, chacune des coquilles 23A, 23B présente, de place en place, le long du canal d'injection 17, des perçages 26 appropriés.

De même, la bride de fixation 24 du corps de vanne 23, qui, en pratique, se partage pour moitié entre ces deux coquilles 23A, 23B présente, de place en place, des perçages 27, pour le passage de vis, non représentées, propres à la fixation de ce corps de vanne 23 au moule 10.

Par ailleurs, dans les formes de réalisation représentées sur les figures 3 à 13, au niveau du débouché 18 du canal d'injection 17, le corps de vanne 23 est profilé extérieurement en buse.

Autrement dit, il forme, extérieurement, un nez 28 plus ou moins effilé.

Par exemple, figure 6, le bord libre de ce nez 28 est droit, sensiblement perpendiculairement à l'axe A du canal d'injection 17.

En variante, figure 13, il est concave, au profil du contour de la cavité de moulage 13.

Dans les formes de réalisation représentées sur les figures 3 à 13, l'orifice d'entrée 19A et l'orifice de sortie 19B du canal d'injection 17 sont décalés longitudinalement l'un par rapport à l'autre, le long de l'axe A de ce canal d'injection 17.

En pratique, l'orifice d'entrée 19A du canal d'injection 17 est alors, préférentiellement, plus proche de son débouché 18 que l'orifice de sortie 19B.

Cependant, en projection sur un plan commun, et ainsi qu'il ressort des figures 10A et 10B, l'orifice d'entrée 19A du canal d'injection 17 et son orifice de sortie 19B se chevauchent l'un l'autre en partie.

En pratique, l'orifice d'entrée 19A et l'orifice de sortie 19B du canal d'injection 17 sont chacun respectivement disposés de part et d'autre du canal d'injection 17, et, donc, de part et d'autre de l'axe A de celui-ci, en appartenant, l'un, à la coquille 23A du corps de vanne 23, et, l'autre, à la coquille 23B.

Dans les formes de réalisation représentées sur les figures 3 à 13, l'orifice d'entrée 19A et l'orifice de sortie 19B du canal d'injection 17 interviennent l'un et l'autre en bout de conduits 30A, 30B, qui, au moins dans leur partie terminale, s'étendent sensiblement perpendiculairement à l'axe A de ce canal d'injection 17.

Par des chambres 31A, 31B, et tel que schématisé en trait interrompus sur la figure 3, ces conduits 30A, 30B sont eux-mêmes susceptibles d'être raccordés à des tubulures 32A, 32B propres à la circulation de la matière de moulage.

En pratique, les conduits 30A, 30B ont des contours circulaires, et il en est donc de même pour l'orifice d'entrée 19A et pour l'orifice de sortie 19B correspondants.

En pratique, également, cet orifice d'entrée 19A et cet orifice de sortie 19B ont un même diamètre D.

Corollairement, la lumière 25 du tiroir 20 est une boutonnière allongée, qui s'étend en longueur suivant l'axe A du canal d'injection 17.

La largeur L3 de cette lumière 25 est au moins égale au diamètre D de l'orifice d'entrée 19A et de l'orifice de sortie 19B, de manière à envelopper ceux-ci.

En pratique, cette largeur L3 est sensiblement égale au diamètre D.

Conjointement, la longueur L4 de la lumière 25 est largement supérieure au contour hors tout de l'ensemble formé par l'orifice d'entrée 19A et par l'orifice de sortie 19B.

Dans la forme de réalisation plus particulièrement représentée sur les figures 3 à 9, les coquilles 23A, 23B constitutives du corps de vanne 23 sont relativement massives, et elles sont par exemple réalisées en métal.

Conjointement, le tiroir 20 est lui-même réalisé en métal, et, préférentiellement, en acier inoxydable.

En outre, dans cette forme de réalisation, l'extrémité libre 33 du tiroir 20 est droite, à l'image du bord libre du nez 28 du corps de vanne 23.

En service, le tiroir 20 est mobile entre une position avancée, pour laquelle, tel que représenté sur la figure 10A, son extrémité libre 33 est à niveau avec le débouché 18 du canal d'injection 17, et une position reculée, pour laquelle, tel que représenté en trait continu sur la figure 10B, il démasque en partie l'orifice d'entrée 19A tout en masquant l'orifice de sortie 19B.

Pour la position avancée, la lumière 25 du tiroir 20 met en communication l'un avec l'autre l'orifice d'entrée 19A et l'orifice de sortie 19B, tout en occultant par ailleurs complètement le canal d'injection 17.

Il y a ainsi une circulation permanente de la matière de moulage à travers la vanne d'injection 15, sans alimentation de la cavité de moulage 13 du moule 10.

Pour la position reculée du tiroir 20, il y a au contraire une alimentation de la cavité de moulage 13 du moule 10, sans dérivation de la matière de moulage en direction de l'orifice de sortie 19B.

Pour toutes les positions intermédiaires du tiroir 20, et pour autant que, tel que schématisé en traits interrompus sur la figure 10B, son extrémité libre 33 ait au moins atteint, et dépasser, l'orifice d'entrée 19A, il y a, avantageusement, une alimentation, à débit plus ou moins variable, de la cavité de moulage 13 du moule 10.

Ainsi qu'il est aisé de le comprendre, le fait que, en projection sur un plan, l'orifice d'entrée 19A et l'orifice de sortie 19B du canal d'injection 17 se chevauchent l'un l'autre, limite avantageusement la course du tiroir 20.

Préférentiellement, pour limiter, encore, au mieux, cette course, l'orifice d'entrée 19A est le plus proche possible du débouché 18 du canal d'injection 17.

Ainsi qu'on le notera, également, la matière de moulage n'est au contact des parois du canal d'injection 17 que lorsque le tiroir 20 est en position reculée, et son contact avec ces parois se limite alors à la seule portion terminale de ce canal d'injection 17.

Les risques d'un gommage de ce canal d'injection 17 se trouvent ainsi avantageusement minimisés.

II en est d'autant plus ainsi que, à chaque mouvement d'aller et retour, le tiroir 20 balaie complètement les parois de ce canal d'injection 17.

Corollairement, les risques de "bullage" de la matière de moulage se trouvent eux-mêmes minimisés.

Dans la variante de réalisation représentée sur les figures 11 à 13, les coquilles 23A, 23B constitutives du corps de vanne 23 sont plus grêles que précédemment, abstraction faite de la bride de fixation 24.

Elles sont par exemple réalisées en matière synthétique, et, préférentiellement, en une matière synthétique à base de fluoropolymère(s), telle que, par exemple, celle vendue sous la désignation commerciale "TEFLON".

Si désiré, et tel que schématisé en traits interrompus sur la figure 11, ces coquilles 23A, 23B peuvent alors être chacune renforcées latéralement par une plaque 34A, 34B en métal.

Corollairement, le tiroir 20, non représenté, demeure, lui, préférentiellement en métal.

Par ailleurs, dans cette variante de réalisation, l'un au moins des conduits 30A, 30B en bout desquels interviennent l'orifice d'entrée 19A et l'orifice de sortie 19B se raccorde à un tel orifice par un épanouissement 36A, 36B allongé en direction du débouché 18 du canal d'injection 17.

Par exemple, et tel que représenté, cet épanouissement 36A, 36B résulte d'un chanfrein 37A, 37B qui recoupe en oblique le conduit 30A, 30B concerné.

Dans la forme de réalisation représentée, il est prévu un épanouissement 36A, 36B pour chacun des conduits 30A, 30B, et cet épanouissement 36A, 36B s'étend jusqu'à proximité immédiate du débouché 18 du canal d'injection 17.

En pratique, dans la forme de réalisation représentée, l'angle que fait le chanfrein 37A, 37B de l'épanouissement 36A, 36B d'un conduit 30A, 30B avec l'axe A du canal d'injection 17 est différent d'un des conduits 30A, 30B à l'autre.

Par exemple, il est plus grand pour le conduit 30A correspondant à l'orifice d'entrée 19A que pour le conduit 30B correspondant à l'orifice de sortie 19B.

Pour le reste, les dispositions sont du même type que les précédentes.

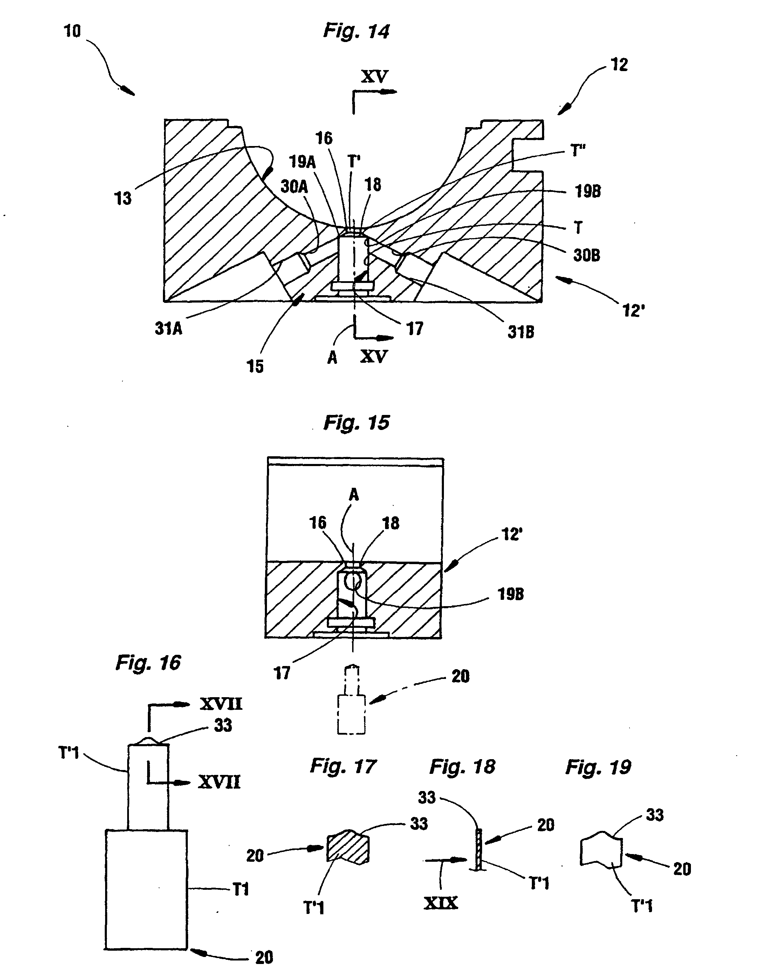

Dans la forme de réalisation représentée sur les figures 14 à 17, la vanne d'injection 15 suivant l'invention fait partie intégrante du moule 10.

Autrement dit, elle est incorporée à ce moule 10.

Plus précisément, dans la forme de réalisation représentée, elle est incorporée au mors 12' inférieur de l'élément de fermeture 12 que comporte ce moule 10, en formant une seule et même pièce avec le reste de ce mors 12' inférieur.

En outre, dans cette forme de réalisation, le canal d'injection 17 présente, successivement, à compter de son débouché 18, qui est confondu avec l'ouverture de coulée 16 du moule 10, au moins deux tronçons T', T, à savoir, un premier tronçon T', de moindres dimensions, en bout duquel intervient le débouché 18, et un deuxième tronçon T, de plus grandes dimensions, qui est celui sur lequel interviennent l'orifice d'entrée 19A et l'orifice de sortie 19B. et, conjointement, le tiroir 20 présente, lui-même, deux tronçons T'1, T1, dont les dimensions sont complémentaires de celles des tronçons T', T du canal d'injection 17.

Par exemple, et tel que représenté, les deux tronçons T', T du canal d'injection 17 sont l'un et l'autre cylindriques, et ils sont reliés l'un à l'autre par un tronçon de transition T" tronconique.

En pratique, l'orifice d'entrée 19A et l'orifice de sortie 19B du canal d'injection 17 sont alors chacun respectivement disposés en positions diamétralement opposées l'un par rapport à l'autre, de part et d'autre de l'axe A de ce canal d'injection 17.

Dans la forme de réalisation représentée, cet orifice d'entrée 19A et cet orifice de sortie 19B interviennent l'un et l'autre en bout de conduits 30A, 30B, qui, au moins dans leur partie terminale, s'étendent en oblique par rapport à l'axe A du canal d'injection 17, en faisant alors un angle aigu avec celui-ci.

Par exemple, et tel que représenté, cet angle est le même pour l'un et l'autre des conduits 30A, 30B.

Dans la forme de réalisation représentée, de sa partie centrale à sa périphérie, le profil de l'extrémité libre 33 du tiroir 20 est globalement concave.

Pour la position avancée du tiroir 20, le tronçon T'1 de celui-ci est en prise avec le tronçon T' du canal d'injection 17, ce qui empêche toute alimentation de la cavité de moulage 13, et, conjointement, son tronçon T1 est en prise avec le tronçon T de ce canal d'injection 17.

Mais, du fait, d'une part, de la longueur du tronçon T'1 de ce tiroir 20, et, d'autre part, de la différence de diamètre de ce tronçon T'1 par rapport au tronçon T1 auquel il fait suite, la matière de moulage circule encore en continu à travers la vanne d'injection 15, en contournant le tronçon T'1.

Pour la position reculée du tiroir 20, cette circulation de la matière de moulage à travers la vanne d'injection 15 se perpétue, mais, du fait de la proximité du flux correspondant par rapport au débouché 18 du canal d'injection 17, alors dégagé, et de l'obliquité du conduit 30A par lequel cette matière de moulage débouche dans le canal d'injection 17, l'alimentation de la cavité de moulage 13 se trouve assurée.

Dans la variante de réalisation schématisée sur les figures 18 et 19, au lieu d'être cylindrique, le tronçon T'1 terminal du tiroir 20 est en forme de lame, comme dans les formes de réalisation représentées sur les figures 3 à 13.

Mais, comme précédemment, et tel que représenté, son extrémité libre 33 peut être profilée.

Il s'avère, en effet, qu'avec une telle extrémité libre 33 profilée pour le tiroir 20, les risques d'un "bullage" de la matière de moulage dans la cavité de moulage 13 au droit du canal d'injection 17 sont minimisés.

Bien entendu, la présente invention ne se limite pas aux formes de réalisation décrites et représentées, mais englobe toute variante d'exécution et/ou de combinaison de leurs divers éléments.

## Revendications

1. Vanne d'injection, pour l'alimentation d'un moule en matière de moulage, comportant un canal d'injection (17), qui ouvre à l'extérieur par un débouché (18) et qui, à distance de ce débouché (18), présente un orifice d'entrée (19A) oropre à l'arrivée de la matière de moulage, et un tiroir (20), qui est monté mobile en translation dans le canal d'injection (17), et sous le contrôle duquel se trouve le débouché (18) de celui-ci, **caractérisée en ce que** le canal d'injection (17) présente un orifice de sortie (19B) propre à une évacuation de la matière de moulage, et **en ce que** le tiroir (20) est agencé pour pouvoir, dans une certaine position, empêcher l'injection de matière au travers du débouché (18) tout en autorisant la circulation de matière à l'intérieur du canal d'injection (17), entre les orifices d'entrée (19A) et de sortie (19B).

2. Vanne d'injection suivant la revendication 1, **caractérisée en ce que**, comme son débouché (18), l'orifice d'entrée (19A) et l'orifice de sortie (19B) du canal d'injection (17) sont l'un et l'autre sous le contrôle du tiroir ( 20).

3. Vanne d'injection suivant la revendication 2, **caractérisée en ce que** l'orifice d'entrée (19A) et l'orifice de sortie (19B) du canal d'injection (17) interviennent latéralement sur un tronçon (T) de ce canal d'injection (17) au contact de la paroi duquel le tiroir (20) est monté coulissant.

4. Vanne d'injection suivant l'une quelconque des revendications 1 à 3, **caractérisée en ce que** l'orifice d'entrée (19A) et l'orifice de sortie (19B) du canal d'injection (17) sont décalés longitudinalement l'un par rapport à l'autre.

5. Vanne d'injection suivant la revendication 4, **caractérisée en ce que** l'orifice d'entrée (19A) du canal d'injection (17) est plus proche de son débouché (18) que l'orifice de sortie (19B).

6. Vanne d'injection suivant l'une quelconque des revendications 4, 5, **caractérisée en ce que**, en projection sur un plan commun, l'orifice d'entrée (19A) du canal d'injection (17) et son orifice de sortie (19B) se chevauchent l'un l'autre en partie.

7. Vanne d'injection sur l'une quelconque des revendications 1 à 6, **caractérisée en ce que** l'orifice d'entrée (19A) et l'orifice de sortie (19B) du canal d'injection (17) interviennent l'un et l'autre en bout de conduits (30A, 30B), qui, au moins dans leur partie terminale, s'étendent sensiblement perpendiculairement à l'axe (A) de ce canal d'injection (17).

8. Vanne d'injection suivant l'une quelconque des revendications 1 à 6, **caractérisée en ce que** l'orifice d'entrée (19A) et l'orifice de sortie (19B) du canal d'injection (17) interviennent l'un et l'autre en bout de conduits (30A, 30B), qui, au moins dans leur partie terminale, s'étendent en oblique par rapport à l'axe (A) de ce canal d'injection (17).

9. Vanne d'injection suivant l'une quelconque des revendications 7, 8, **caractérisée en ce que** l'un au moins des conduits (30A, 30B) en bout desquels interviennent l'orifice d'entrée (19A) et l'orifice de sortie (19B) se raccorde à un tel orifice par un épanouissement (36A, 36B) allongé en direction du débouché (18) du canal d'injection (17).

10. Vanne d'injection suivant la revendication 9, **caractérisée en ce que** l'épanouissement (36A, 36B) d'un conduit (30A, 30B) résulte d'un chanfrein (37A, 37B) qui recoupe en oblique ce conduit (30A, 30B).

11. Vanne d'injection suivant l'une quelconque des revendications 9, 10, **caractérisée en ce qu'**il est prévu un épanouissement (36A, 36B) pour chacun des conduits (30A, 30B).

12. Vanne d'injection suivant les revendications 10 et 11, prises conjointement, **caractérisée en ce que** l'angle que fait le chanfrein (37A, 37B) de l'épanouissement (36A, 36B) d'un conduit (30A, 30B) avec l'axe (A) du canal d'injection (17) est différent d'un des conduits (30A, 30B) à l'autre.

13. Vanne d'injection suivant l'une quelconque des revendications 1 à 12, **caractérisée en ce que**, de sa partie centrale à sa périphérie, le profil de l'extrémité libre (33) du tiroir (20) est globalement concave.

14. Vanne d'injection suivant l'une quelconque des revendications 1 à 13, **caractérisée en ce que** le canal d'injection (17) a une même section transversale sur toute sa longueur, et le tiroir (20) présente, transversalement, une lumière (25), qui le traverse de part en part, et par l'intermédiaire de laquelle l'orifice d'entrée (19A) et l'orifice de sortie (19B) du canal d'injection (17) peuvent être mis en communication l'un avec l'autre.

15. Vanne d'injection suivant la revendication 14, **caractérisée en ce que** la section transversale du canal d'injection (17) est rectangulaire, avec une largeur (L1) très inférieure à sa longueur (L2), et le tiroir (20) se présente globalement sous la forme d'une lame mince.

16. Vanne d'injection suivant l'une quelconque des revendications 1 à 15, **caractérisée en ce que** le canal d'injection (17) présente au moins deux tronçons (T', T,) à savoir un premier tronçon (T'), de moindres dimensions, en bout duquel intervient le débouché (18), et un deuxième tronçon (T), de plus grandes dimensions, sur lequel interviennent l'orifice d'entrée (19A) et l'orifice de sortie (19B), et le tiroir (20) présente, lui-même, deux tronçons (T'1, T1), dont les dimensions sont complémentaires de celles des tronçons (T', T) du canal d'injection (17).

17. Vanne d'injection suivant la revendication 16, **caractérisée en ce que** les deux tronçons (T, T) du canal d'injection (17) sont l'un et l'autre cylindriques.

18. Vanne d'injection suivant la revendication 17, **caractérisée en ce que** les deux tronçons (T', T) du canal d'injection (17) sont reliés l'un à l'autre par un tronçon de transition (T') tronconique.

19. Vanne d'injection suivant l'une quelconque des revendications 1 à 18, **caractérisée en ce qu'**elle comporte un corps de vanne (23), dans lequel s'étend son canal d'injection (17), et par lequel elle est adaptée à être rapportée sur un moule (10).

20. Vanne d'injection suivant la revendication 19, **caractérisée en ce que** le corps de vanne (23) est formé de deux coquilles (23A, 23B) affrontées l'une à l'autre par un plan de joint (P) qui interfère longitudinalement avec le canal d'injection (17).

21. Vanne d'injection suivant les revendications 15 et 20, prises conjointement, **caractérisée en ce que** le plan de joint (P) s'étend suivant l'une des grandes laces du canal d'injection (17), en sorte que celui-ci appartient totalement à l'une des coquilles (23B).

22. Vanne d'injection suivant l'une quelconque des revendications 19 à 21, **caractérisée en ce que**, au niveau du débouché (18) du canal d'injection (17), le corps de vanne (23) est profilé extérieurement en buse.

23. Vanne d'injection suivant l'une quelconque des revendications 20 à 22, **caractérisée en ce que** les coquilles (23A, 23B) sont en matière synthétique.

24. Vanne d'injection suivant la revendication 23, **caractérisée en ce que** les coquilles (23A, 23B) sont en une matière synthétique à base de fluoropolymères.

25. Vanne d'injection suivant la revendication 24, **caractérisée en ce que** les coquilles (23A, 23B) sont en "TEFLON".

26. Vanne d'injection suivant l'une quelconque des revendications 1 à 18, **caractérisée en ce qu'**elle fait partie intégrante d'un moule (10).

27. Vanre d'injection suivant l'une quelconque des revendications 1 à 26, **caractérisée en ce que** le tiroir (20) est en métal.

## Claims

1. An injection valve for feeding molding material to a mold, of the kind including an injection channel (17) which opens to the outside via an outlet (18) and which has, at a distance from said outlet (18), an inlet orifice (19A) to which the molding material is fed, and further including a slider unit (20) that is mounted in the injection channel (17) to be mobile in translation therein, and that controls the outlet (18) thereof, **characterized in that** the injection channel (17) has an outlet orifice (19B) for evacuating molding material, and **in that** the slider unit (20) is arranged to be able, in a certain position, to prevent the injection of material through the outlet (18) while allowing the circulation of material inside the injection channel (17), between the inlet and outlet orifices (19A, 19B).

2. An injection valve according to claim 1, **characterized in that**, like its outlet (18), the inlet orifice (19A) and the outlet orifice (19B) of the injection channel (17) are both controlled by the slider unit (20).

3. An injection valve according to claim 2, **characterized in that** the inlet orifice (19A) and the outlet orifice (19B) of the injection channel (17) are laterally disposed on a section (T) of said injection channel (17) in contact with the wall of which the slider unit (20) is slidably mounted.

4. An injection valve according to any of claims 1 to 3, **characterized in that** the inlet orifice (19A) and the outlet orifice (19B) of the injection channel (17) are offset longitudinally from each other.

5. An injection valve according to claim 4, **characterized in that** the inlet orifice (19A) of the injection channel (17) is closer to its outlet (18) than the outlet orifice (19B).

6. An injection valve according to either claim 4 or claim 5, **characterized in that**, projected onto a common plane, the inlet orifice (19A) and the outlet orifice (19B) of the injection channel (17) partly overlap.

7. An injection valve on [sic] any of claims 1 to 6, **characterized in that** the inlet orifice (19A) and the outlet orifice (19B) of the injection channel (17) are at the ends of pipes (30A, 30B) at least the end parts of which are substantially perpendicular to the axis (A) of the injection channel (17).

8. An injection valve according to any of claims 1 to 6, **characterized in that** the inlet orifice (19A) and the outlet orifice (19B) of the injection channel (17) are at the ends of pipes (30A, 30B) at least the end parts of which are oblique to the axis (A) of the injection channel (17).

9. An injection valve according to either claim 7 or claim 8, **characterized in that** at least one of the pipes (30A, 30B) with the inlet orifice (19A) and the outlet orifice (19B) at their ends is connected to the respective orifice by an enlargement (36A, 36B) that is elongate in the direction of the outlet (18) of the injection channel (17).

10. An injection valve according to claim 9, **characterized in that** the enlargement (36A, 36B) of a pipe (30A, 30B) is produced by a bevel (37A, 37B) that intersects the pipe (30A, 30B) obliquely.

11. An injection valve according to either claim 9 or claim 10, **characterized in that** an enlargement (36A, 36B) is provided on each of the pipes (30A, 30B).

12. An injection valve according to claim 10 in conjunction with claim 11, **characterized in that** the angle between the bevel (37A, 37B) of the enlargement (36A, 36B) of a pipe (30A, 30B) and the axis (A) of the injection channel (17) is different from one of the pipes (30A, 30B) to the other.

13. An injection valve according to any of claims 1 to 12, **characterized in that** the profile of the free end (33) of the slider unit (20) is globally concave from its central part to its periphery.

14. An injection valve according to any of claims 1 to 13, **characterized in that** the injection channel (17) has the same cross section over the whole of its length and the slider unit (20) has a transverse opening (25) that passes completely through it and through which the inlet orifice (19A) and the outlet orifice (19B) of the injection channel (17) can communicate with each other.

15. An injection valve according to claim 14, **characterized in that** the cross section of the injection channel (17) is rectangular, with a width (L1) very much less than its length (L2), and the slider unit (20) has the overall form of a thin blade.

16. An injection valve according to any of claims 1 to 15, **characterized in that** the injection channel (17) has at least two sections (T', T), namely a smaller first section (T') at the end of which is the outlet (18) and a larger second section (T) including the inlet orifice (19A) and the outlet orifice (19B), and the slider unit (20) has two sections (T'1, T1) whose dimensions are complementary to those of the sections (T', T) of the injection channel (17).

17. An injection valve according to claim 16, **characterized in that** the two sections (T', T) of the injection channel (17) are both cylindrical.

18. An injection valve according to claim 17, **characterized in that** the two sections (T', T) of the injection channel (17) are connected to each other by a frustoconical transition section (T").

19. An injection valve according to any of claims 1 to 18, **characterized in that** it includes a valve body (23) which contains its injection channel (17) and is adapted to be attached to a mold (10).

20. An injection valve according to claim 19, **characterized in that** the valve body (23) is formed of two shells (23A, 23B) meeting face-to-face in a joint plane (P) that intersects the injection channel (17) longitudinally.

21. An injection valve according to claim 15 in conjunction with claim 20, **characterized in that** the joint plane (P) is the plane of one of the larger faces of the injection channel (17) and thus belongs completely to one of the shells (23B).

22. An injection valve according to any of claims 19 to 21, **characterized in that** the valve body (23) has a nozzle-like external profile at the location of the outlet (18) of the injection channel (17).

23. An injection valve according to any of claims 20 to 22, **characterized in that** the shells (23A, 23B) are made of synthetic material.

24. An injection valve according to claim 23, **characterized in that** the shells (23A, 23B) are made of a fluoropolymer-based synthetic material.

25. An injection valve according to claim 24, **characterized in that** the shells (23A, 23B) are made of "TEFLON" [sic] .

26. An injection valve according to any of claims 1 to 18, **characterized in that** it is an integral part of a mold (10).

27. An injection valve according to any of claims 1 to 26, **characterized in that** the slider unit (20) is made of metal.

## Patentansprüche

1. Einspritzventil zur Beschickung einer Form mit Gussmaterial, umfassend einen Einspritzkanal (17), der äußerlich in einer Mündung (18) mündet und unter Abstand von dieser Mündung (18) eine Eintrittsöffnung (19A) aufweist, geeignet zur Zufuhr von Gussmaterial, sowie eine Schublade (20), die translatorisch beweglich in den Einspritzkanal (17) montiert ist und unter deren Steuerung die Mündung (18) davon vorliegt, **dadurch gekennzeichnet, dass** der Einspritzkanal (17) eine Austrittsöffnung (19B) aufweist, geeignet für eine Evakuierung des Form- oder Gussmaterials und dass die Schublade (20) ausgebildet ist, um in einer bestimmten Position das Einspritzen von Material durch die Mündung (18) zu verhindern, während eine Zirkulation des Materials im Inneren des Einspritzkanals (17) zwischen den Eintritts- und Austrittsöffnungen (19A, 19B) ermöglicht ist.

2. Einspritzventil nach Anspruch 1, **dadurch gekennzeichnet, dass** wie die Mündung (18) auch die Eintrittsöffnung (19A) und die Austrittsöffnung (19B) des Einspritzkanals (17) beide der Steuerung der Schublade bzw. des Schiebreglers (20) unterliegen.

3. Einspritzventil nach Anspruch 2, **dadurch gekennzeichnet, dass** die Eintrittsöffnung (19A) und die Austrittsöffnung (19B) des Einspritzkanals (17) lateralwärts an einem Abschnitt (T) des Einspritzkanals (17) vorgesehen sind, an dessen Wandung die Schublade bzw. das Schiebeelement (20) gleitfähig montiert ist.

4. Einspritzventil nach einem der Ansprüche 1 bis 3, **dadurch gekennzeichnet, dass** die Eintrittsöffnung (19A) und die Austrittsöffnung (19B) des Einspritzkanals (17) in Längsrichtung mit Bezug zueinander versetzt sind.

5. Einspritzventil nach Anspruch 4, **dadurch gekennzeichnet, dass** die Eintrittsöffnung (19A) des Einspritzkanals (17) näher an dessen Mündung (18) vorliegt als die Austrittsöffnung (19B).

6. Einspritzventil nach einem der Ansprüche 4, 5, **dadurch gekennzeichnet, dass** in der Projektion auf eine gemeinsame Ebene die Eintrittsöffnung (19A) des Einspritzkanals (17) und die Austrittsöffnung (19B) davon mit Bezug zueinander teilweise überlagert sind bzw. überlappen.

7. Einspritzventil nach einem der Ansprüche 1 bis 6, **dadurch gekennzeichnet, dass** die Eintrittsöffnung (19A) und die Austrittsöffnung (19B) des Einspritzkanals (17) beide endseitig von Leitungen (30A, 30B) vorgesehen sind, die sich an zumindest ihrem Endabschnitt im Wesentlichen senkrecht zur Achse (A) des Einspritzkanals (17) erstrecken.

8. Einspritzventil nach einem der Ansprüche 1 bis 6, **dadurch gekennzeichnet, dass** die Eintrittsöffnung (19A) und die Austrittsöffnung (19B) des Einspritzkanals (17) beide endseitig von Leitungen (30A, 30B) vorgesehen sind, die sich an zumindest ihrem Endabschnitt schräg mit Bezug auf die Achse (A) des Einspritzkanals (17) erstrecken.

9. Einspritzventil nach einem der Ansprüche 7, 8, **dadurch gekennzeichnet, dass** zumindest eine der Leitungen (30A, 30B), an deren Ende die Eintrittsöffnung (19A) und die Austrittsöffnung (19B) vorgesehen sind, sich an solch einer Öffnung durch eine Aufweitung (36A, 36B) anschließt, länglich in Richtung der Mündung (18) des Einspritzkanals (17).

10. Einspritzventil nach Anspruch 9, **dadurch gekennzeichnet, dass** die Aufweitung (36A, 36B) einer Leitung (30A, 30B) aus einer Abschrägung bzw. Keilfläche (37A, 37B) resultiert, schräg die Leitung (30A, 30B) schneidend.

11. Einspritzventil nach einem der Ansprüche 9, 10, **dadurch gekennzeichnet, dass** eine Aufweitung (36A, 36B) für jede der Leitungen (30A, 30B) vorgesehen ist.

12. Einspritzventil nach den Ansprüchen 10 und 11 gemeinsam, **dadurch gekennzeichnet, dass** der Winkel, den die Abschrägung oder Schrägfläche (37A, 37B) der Aufweitung (36A, 36B) einer Leitung (30A, 30B) mit der Achse (A) des Einspritzkanals (17) bildet, unterschiedlich ist von einer Leitung (30A, 30B) zur anderen.

13. Einspritzventil nach einem der Ansprüche 1 bis 12, **dadurch gekennzeichnet, dass** von dem mittleren Abschnitt hin zur Peripherie das Profil des freien Endes (33) des Schiebeelements bzw. der Schublade (20) global konkav ist.

14. Einspritzventil nach einem der Ansprüche 1 bis 13, **dadurch gekennzeichnet, dass** der Einspritzkanal (17) über einen konstanten Querschnitt bezüglich der gesamten Länge verfügt, wobei das Schiebeelement bzw. die Schublade (20) transversalwärts eine Öffnung (25) aufweist, wobei es sich um eine Durchtrittsöffnung handelt und mittels welcher die Eintrittsöffnung (19A) und die Austrittsöffnung (19B) des Einspritzkanals (17) miteinander in Verbindung bringbar sind.

15. Einspritzventil nach Anspruch 14, **dadurch gekennzeichnet, dass** der Querschnitt des Einspritzkanals rechteckförmig ist, mit einer Breite (L1), die deutlich geringer ist als dessen Länge (L2), wobei das Schiebeelement bzw. die Schublade (20) die generelle Form einer schmalen Klinge aufweist.

16. Einspritzventil nach einem der Ansprüche 1 bis 15, **dadurch gekennzeichnet, dass** der Einspritzkanal (17) zumindest zwei Abschnitte (T', T) aufweist, nämlich einen ersten Abschnitt (T') mit geringeren Abmessungen, am Ende dessen die Mündung (18) vorliegt, und einen zweiten Abschnitt (T) mit größeren Abmessungen, an welchem die Eintrittsöffnung (19A) und die Austrittsöffnung (19B) vorgesehen sind, wobei das Schiebeelement bzw. die Schublade (20) selbst über zwei Abschnitte (T'1, T1) verfügt, deren Abmessungen komplementär sind bezüglich jener der Abschnitte (T', T) des Einspritzkanals (17).

17. Einspritzventil nach Anspruch 16, **dadurch gekennzeichnet, dass** die zwei Abschnitte (T', T) des Einspritzkanals (17) beide zylindrisch sind.

18. Einspritzventil nach Anspruch 17, **dadurch gekennzeichnet, dass** die zwei Abschnitte (T', T) des Einspritzkanals (17) mittels eines konusstumpfartigen Übergangsabschnittes (T") verbunden sind.

19. Einspritzventil nach einem der Ansprüche 1 bis 18, **dadurch gekennzeichnet, dass** es einen Ventilkörper (23) umfasst, in welchem sich dessen Einspritzkanal (17) erstreckt, und mittels welchem es in der Lage ist, an einer Form (10) befestigt zu werden.

20. Einspritzventil nach Anspruch 19, **dadurch gekennzeichnet, dass** der Ventilkörper (23) aus zwei Kokillen (23A, 23B) gebildet ist, einander gegenüberstehend mittels einer Dichtebene (P), die in Längsrichtung mit dem Einspritzkanal (17) zusammenfällt bzw. diesen schneidet.

21. Einspritzventil nach den Ansprüchen 15 und 20, gemeinsam, **dadurch gekennzeichnet, dass** die Dichtebene (P) sich entlang einer der Hauptflächen des Einspritzkanals (17) erstreckt, so dass dieser vollständig zu einer der Kokillen (23B) gehört.

22. Einspritzventil nach einem der Ansprüche 19 bis 21, **dadurch gekennzeichnet, dass** auf dem Niveau der Mündung (18) des Einspritzkanals (17) der Ventilkörper (23) äußerlich zu einer Düse profiliert ist.

23. Einspritzventil nach einem der Ansprüche 20 bis 22, **dadurch gekennzeichnet, dass** die Kokillen (23A, 23B) aus Kunststoffmaterial sind.

24. Einspritzventil nach Anspruch 23, **dadurch gekennzeichnet, dass** die Kokillen (23A, 23B) aus Fluorpolymer basiertem Kunststoffmaterial sind.

25. Einspritzventil nach Anspruch 24, **dadurch gekennzeichnet, dass** die Kokillen (23A, 23B) aus Teflon sind.

26. Einspritzventil nach einem der Ansprüche 1 bis 18, **dadurch gekennzeichnet, dass** es einstückiger Bestandteil einer Form (10) ist.

27. Einspritzventil nach einem der Ansprüche 1 bis 26, **dadurch gekennzeichnet, dass** die Schublade bzw. das Schiebeelement bzw. der Schieber (20) aus Metall ist.
